# EUROPÄISCHE PATENTSCHRIFT

(11) **EP 0 677 408 B1**
(45) Veröffentlichungstag und Bekanntmachung des Hinweises auf die Patenterteilung: **04.11.1998**
(21) Anmeldenummer: 95100788.9
(22) Anmeldetag: 20.01.1995
(51) Int. Cl.: B60H 1/00

(54) **Verfahren zur Steuerung und Regelung einer Klimaanlage bzw. -automatik für Kraftfahrzeuge**
Method for controlling and regulating of an automotive automatic air conditioning installation
Procédé de contrôle et de réglage d'une installation de conditionnement d'air automatique d'automobiles

(30) Priorität: 12.04.1994 DE 4412486
(43) Veröffentlichungstag der Anmeldung: 18.10.1995
(73) Patentinhaber: Bayerische Motoren Werke Aktiengesellschaft, 80788 München (DE)
(72) Erfinder: Schlaudraff, Ernst, D-81245 München (DE)
(74) Vertreter: Dirscherl, Josef

(56) Entgegenhaltungen:
- EP-A- 0 416 523
- EP-A- 0 546 429
- DE-A- 3 427 292
- DE-A- 4 023 554
- PATENT ABSTRACTS OF JAPAN vol. 11 no. 183 (M-598) ,12.Juni 1987 & JP-A-62 012410 (MITSUBISHI HEAVY IND LTD)
- PATENT ABSTRACTS OF JAPAN vol. 12 no. 247 (M-717) ,13.Juli 1988 & JP-A-63 034216 (NIPPON DENSO CO LTD)

## Beschreibung

Die Erfindung betrifft ein Verfahren zur Steuerung und Regelung einer Klimaanlage bzw. -automatik für Kraftfahrzeuge mit einer Bedieneinheit mit einem ersten und einem zweiten Temperatureinstellelement zur manuellen Sollwertvorgabe, der für die linke und die rechte Fahrzeuginnenraumseite einzustellenden Temperaturen der für beide Fahrzeuginnenraumseiten getrennt vorgesehenen, d. h. zweikanalig ausgeführten Temperaturregelung sowie mit mindestens einem Einstellelement zum Einschalten eines Automatikbetriebes, bei dem die Luftverteilung in den beiden Fahrzeuginnenraumseiten über die Entfrosterklappe(n), Belüftungsklappe(n) sowie Fußraumklappe(n) insbesondere einheitlich, d. h. einkanalig gesteuert bzw. geregelt wird.

Aus der DE-A-34 27 292 ist bereits eine Klimaanlage bzw. Klimaautomatik bekannt, die an ihrer Bedieneinheit Einstellelemente für primäre Funktionen, wie Entfrosten, Kühlen und Umluftzirkulation aufweist, welche für beide Fahrzeuginnenraumseiten einheitlich und damit einkanalig gesteuert werden. Ferner weist die Bedieneinheit für sekundäre Funktionen je ein Temperaturwahlglied zur manuellen Sollwertvorgabe der für beide Fahrzeuginnenraumseiten einzustellenden Temperaturen und jeweils den beiden Fahrzeuginnenraumseiten zugeordnete Einstellglieder für gesonderte Arbeitsprogramme wie Automatikbetrieb, maximale Öffnung der Luftklappen, Schließen der Belüftungsklappen auf, welche für beide Fahrzeuginnenraumseiten individuell wählbar sind und somit zweikanalig geregelt bzw. gesteuert werden. Aufgrund der für beide Fahrzeuginnenraumseiten jeweils getrennt vorgesehenen Luftverteilung sind an der Bedieneinheit die Einstellglieder und am Klimakasten zur Klappenbetätigung die entsprechenden Stellglieder doppelt vorgesehen, was zu einem hohen Material-, Ansteuerungs- und Regelungsaufwand führt.

Weiterhin ist aus der EP-A-0 546 429 ein Verfahren zur Regelung einer Klimaanlage für Kraftfahrzeuge bekannt, bei dem die Luftverteilung in den beiden Fahrzeuginnenraumseiten über Entfrosterklappen, Belüftungsklappen sowie Fußraumklappen einkanalig geregelt wird. Bei eingeschaltetem Automatikbetrieb ist die Fußraumklappe nahezu in die vollständige Offenstellung gesteuert, um ein höheres Temperaturniveau zu erhalten. Dabei wird die Fußraumausblastemperatur in einem vorgegebenen Ausblastemperaturbereich von ca. 10° bis ca. 35° Celsius durch Übersteuerung der Fußraumtemperaturregelung auf einem konstanten höheren Temperaturniveau gehalten. Bei diesem bekannten Verfahren wird nicht berücksichtigt, daß für die Fahrerseite und die Beifahrerseite unterschiedliche Temperatursollwerte vorgegeben werden können.

Eine einfachere und kostengünstigere Version einer Klimaanlage bzw. -automatik ist aus der DE-A-40 23 554 bekannt. Bei dieser bekannten Klimaanlage bzw. -automatik erfolgt bei nicht eingeschaltetem Automatikoetrieb die Temperaturregelung für die linke und die rechte Fahrzeuginnenraumseite jeweils separat und damit zweikanalig und die Luftverteilung für beide Fahrzeuginnenraumseiten einheitlich, d. h. einkanalig. Wird jedoch bei dieser bekannten Klimaanlage bzw. -automatik der Automatik-Schalter zur Aktivierung der Funktion "Klimaautomatik" betätigt, so erfolgt zwar weiterhin eine einkanalige Luftverteilung. Die Temperaturregelung wird jedoch von der zweikanaligen Regelung auf die für beide Fahrzeuginnenraumseiten einheitliche und damit einkanalige Regelung umgestellt, wobei sich die Regelung an der Sollwertvorgabe einer Fahrzeugseite insbesondere der Fahrerseite orientiert. Dies wird dadurch realisiert, daß die Sollwertvorgabe der Beifahrerseite vorzugsweise der Sollwertvorgabe der Fahrerseite gleichgesetzt wird und damit die individuelle Sollwertvorgabe der Beifahrerseite übersteuert wird. Da bei dieser bekannten Klimaanlage bzw. -automatik beim Einschalten des Automatikbetriebs die an sich zweikanalige Temperaturregelung auf die für beide Fahrzeuginnenraumseiten einheitliche und damit einkanalige Temperaturregelung umgestellt wird, kommt es beim Ein- und Ausschalten des Automatikbetriebes bei unterschiedlichen Temperatur-Sollwerteinstellungen zu einer unerwünschten Temperaturänderung beispielsweise auf der Beifahrerseite. Zudem kann der Vorteil der unterschiedlichen Temperaturvorgabe für die Fahrer- und Beifahrerseite im Automatikbetrieb nicht genutzt werden.

Ein weiterer Nachteil dieser bereits bekannten Kraftfahrzeug-Klimaanlagen besteht ferner darin, daß entweder durch Schließen der Fußraumklappen die Lufteinströmung in den Fahrzeuginnenraum ganz verhindert wird oder unkomfortable Kaltluft an zumindest einer der Fahrzeuginnenraumseiten in den Fußraum eingeleitet wird.

Es ist daher Aufgabe der Erfindung, ein Verfahren eingangs genannter Art zum Betrieb einer Klimaanlage bzw. - automatik anzugeben, das bei einem einfachen und damit kostengünstigen Aufbau der Klimaanlage bzw. -automatik eine sehr komfortable Temperatur- und Klimaregelung auch im Hinblick auf eine möglichst gute Scheibenbeschlagsfreihaltungsprophylaxe für beide Fahrzeugseiten auch im Automatikbetrieb der Klimaanlage bzw. -automatik ermöglicht.

Diese Aufgabe wird erfindungsgemäß dadurch gelöst, daß auch bei eingeschaltetem Automatikbetrieb die Temperaturregelung für beide Fahrzeuginnenraumseiten getrennt und damit zweikanalig erfolgt und daß die Fußraumklappe(n) für zumindest nahezu den gesamten Regelbereich der Klimaanlage bzw. -automatik zumindest nahezu in die vollständige Offenstellung gesteuert ist bzw. sind und daß die Fußraumausblastemperatur zumindest nahezu während der gesamten Zeit, während der die Fußraumklappe(n) zumindest nahezu in die vollständige Offenstellung gesteuert ist bzw. sind bei durch die Fußraumtemperaturregelung niedriger als etwa 29°C vorgegebener Fußraumausblastemperatur durch Übersteuerung der Fußraumtemperaturregelung im Bereich von etwa 29°C gehalten wird.

Durch das erfindungsgemäße Verfahren wird erreicht, daß auch bei Betriebszuständen der Klimaanlage bzw. -automatik, bei denen, wie bisher bekannt, die Fußraumklappen entweder geschlossen sind oder zumindest bei einer der beiden Fahrzeuginnenraumseiten zu kalte Luft in den Fußraum eingeblasen wird, nunmehr wohltemperierte Luft im Bereich von etwa 29°C durch die großen Lufteintrittsöffnungen im Fußraum in diesen eingeblasen wird. Es wird damit selbst bei Klimaanlagen bzw. -automatikgeräten, bei denen sowohl die Temperaturregelung als auch die Luftverteilungsregelung im Automatikbetrieb zweikanalig ausgelegt sind, durch die großen Luftmengen, die weitgehend zugfrei in das Fahrzeuginnere einströmen, ein sehr guter Klimakomfort bei größtmöglicher Scheibenbeschlagsfreihaltungsprophylaxe erreicht.

Ganz besonders vorteilhaft ist das erfindungsgemäße Verfahren bei Klimaanlagen bzw. Klimaautomatikgeräten, bei denen die Temperaturregelung zwar zweikanalig vorgesehen ist, die Luftverteilung aber für beide Fahrzeuginnenraumseiten nur einheitlich und damit einkanalig erfolgt.

Wenn bei dieser Art von Klimaanlagen bzw. Klimaautomatikgeräten die höhere der beiden, für die linke bzw. für die rechte Fahrzeuginnenraumseite eingestellte Innenraumsolltemperatur maßgeblich für die Steuerung der für beide Fahrzeuginnenraumseiten gemeinsam vorgesehenen Fußraumklappe ist, dann wird bei den bekannten Klimaanlagen bzw. Klimaautomatikgeräten dieser Art bisher auf der Fahrzeuginnenraumseite, bei der die niedrigere Solltemperatur eingestellt ist, kalte Luft in den Fußraum eingeblasen, was von dem betreffenden Passagier als sehr unangenehm empfunden wird. In diesem Falle wird durch das erfindungsgemäße Verfahren erreicht, daß auch in den Fußraum dieser Fahrzeuginnenraumseite Luft mit einer Temperatur von etwa 29°C eingeblasen wird, die von dem Passagier dann als angenehm empfunden wird.

Wenn jedoch bei dieser Art von Klimaanlagen bzw. Klimaautomatikgeräten die niedrigere der beiden für die linke bzw. für die rechte Fahrzeuginnenraumseite eingestellte Innenraumsolltemperatur maßgeblich ist für die Regelung der für beide Fahrzeuginnenraumhälften gemeinsam vorgesehenen Fußraumklappe, dann wird die Fußraumklappe frühzeitig geschlossen, so daß auf der Fahrzeuginnenraumseite, bei der die höhere Solltemperatur eingestellt ist, diese nicht realisiert werden kann. Zudem verschlechtert sich hier das Innenraumklima, da zu wenig Luft in den Fahrzeuginnenraum einströmt. Es findet dann eine Verschiebung der Luftströme in Richtung Belüftungsklappe sowie Entfrosterklappe statt, was zu unerwünschten Zugerscheinungen im Fahrzeug führt.

Darüber hinaus erfolgt nach dem erfindungsgemäßen Verfahren bei einer Klimaanlage bzw. -automatik, bei der die Luftverteilung in den beiden Fahrzeuginnenraumseiten über die Entfrosterklappe(n), Belüftungsklappe(n) sowie Fußraumklappe(n) einheitlich, d. h. einkanalig gesteuert bzw. geregelt wird, im Automatikbetrieb die Regelung der Entfrosterklappe(n) in Abhängigkeit vom Temperatursollwert für die Fahrerseite bzw. alternativ in Abhängigkeit vom höheren der beiden Temperatursollwerte und die Regelung der Belüftungsklappe(n) in Abhängigkeit vom höheren der beiden Temperatursollwerte.

Bei einer Klimaanlage mit dem erfindungsgemäßen Verfahren wird nicht nur vermieden, daß in den Fußraum als zu kalt empfundene Luft geblasen wird, es wird vielmehr auch vermieden, daß sowohl in den Kopfraum als auch in den Brustbereich als zu warm empfundene Luft geblasen wird. Es wird damit ein besonders gutes Raumklima im Fahrzeug erzeugt.

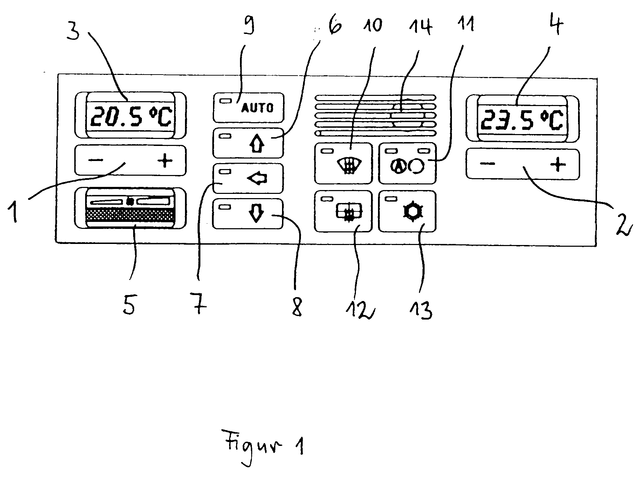

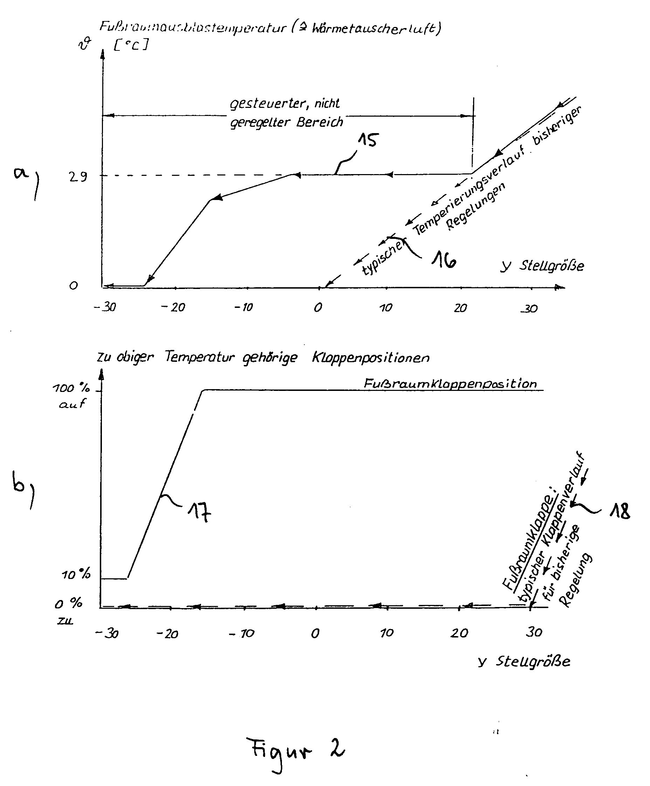

Im folgenden wird ein Ausführungsbeispiel der Erfindung anhand der Fig. 1 und 2a und b näher erläutert.

Es zeigen
- Fig. 1: eine Bedieneinheit einer nach dem erfindungsgemäßen Verfahren arbeitenden Klimaanlage bzw. -automatik,
- Fig. 2a: ein erstes Diagramm, das den Zusammenhang zwischen Fußraumausblastemperatur und der Stellgröße des Führungsreglers der Klimaanlage bzw. -automatik wiedergibt und
- Fig. 2b: ein zweites Diagramm, das die Fußraumklappenposition ebenfalls in Abhängigkeit von der Stellgröße des Führungsreglers der Klimaanlage bzw. -automatik wiedergibt.

Die in Fig. 1 dargestellte Bedieneinheit einer nach dem erfindungsgemäßen Verfahren arbeitenden Klimaanlage bzw. -automatik weist für die linke Fahrzeuginnenraumseite, beispielsweise die Fahrerseite, sowie für die rechte Fahrzeuginnenraumseite, beispielsweise für die Beifahrerseite, jeweils ein Temperatureinstellelement 1 bzw. 2 zur manuellen Sollwertvorgabe der für die linke und rechte Fahrzeuginnenraumseite einzustellenden Temperaturen der für beide Fahrzeuginnenraumseiten getrennt vorgesehenen, d. h. zweikanalig ausgeführten Temperaturregelung auf. Die jeweils eingestellte Solltemperatur wird mit Hilfe der Digitalanzeigeelemente 3 bzw. 4 angezeigt. Dem digitalen Anzeigeelement 3, beispielsweise für die Fahrerseite, kann die Solltemperatur von 20,5°C entnommen werden. Wie dem digitalen Anzeigeelement 4, beispielsweise für die Beifahrerseite zu entnehmen ist, beträgt die für die Beifahrerseite eingestellte Solltemperatur 23,5°C. Diese Solltemperaturen können durch entsprechende Betätigung der Temperatureinstellelemente 1 und 2 höher bzw. niedriger eingestellt werden.

Ferner ist bei der in der Figur dargestellten Bedieneinheit ein Einstellelement 5 zur Einstellung der Luftmenge über die entsprechende Steuerung der Luftgebläsedrehzahl vorgesehen. Darüber hinaus enthält die Bedieneinheit der Klimaanlage bzw. -automatik Einstellelemente 6, 7 und 8 zur manuellen und damit individuellen Einstellung der Luftverteilung. Durch Betätigen des Einstellelementes 6 kann der Luftstrom vorwiegend an den Fensterscheibenbereich des Kraftfahrzeuges geleitet werden. Durch Betätigen des Einstellelementes 7 kann der Luftstrom vorzugsweise auf den Kopf- und Brustbereich in den Innenraum geleitet werden. Schließlich kann durch Betätigen des Einstellelements 8 der Luftstrom im überwiegenden Teil in den Fußraum geleitet werden.

Neben der vorstehend beschriebenen individuellen Luftverteilung durch Betätigung der entsprechenden Einstellglieder 6, 7 oder 8 wird die einströmende Luft bei Betätigung des Einstellelementes 9 im sog. Klimaautomatikbetrieb automatisch im gesamten Innenraum des Kraftfahrzeuges verteilt. Diese Einstellelemente 6, 7, 8 oder 9 für die Luftverteilung sind nur einfach und damit für beide Fahrzeuginnenraumseiten gemeinsam vorgesehen. Dies bedeutet, daß die Luftverteilung für beide Fahrzeuginnenraumseiten nicht separat sondern nur für den gesamten Fahrgastraum einheitlich gesteuert werden kann.

Darüber hinaus enthält die in der Figur dargestellte Bedieneinheit eine sog. Defroster-Taste 10, eine Taste 11 zur Umschaltung von Außenluftbetrieb in den Umluftbetrieb, eine Taste 12 zum Einschalten der heizbaren Heckscheibe sowie eine Taste 13 zum Einschalten des Kältekreislaufes der Klimaanlage. Schließlich ist bei der in der Figur dargestellten Bedieneinheit noch der Innenraumtemperaturfühler 14 vorgesehen. Bei dieser nach dem erfindungsgemäßen Verfahren arbeitenden Klimaanlage bzw. -automatik wird die Temperatur in beiden Fahrzeuginnenraumhälften jeweils separat auf den eingestellten Sollwert, nämlich 20,5°C auf der Fahrerseite sowie 23,5°C auf der Beifahrerseite geregelt. Die Luftverteilung im Kraftfahrzeug erfolgt jedoch für beide Fahrzeuginnenraumseiten über die Entfrosterklappe(n), Belüftungsklappe(n) und Fußraumklappe(n) einheitlich, d. h. einkanalig.

Bei der beschriebenen Klimaanlage bzw. -automatik erfolgt auch im Klimaautomatikbetrieb, d. h. bei betätigtem Einstellelement 9 und damit bei automatischer Luftverteilung die Temperaturregelung für beide Fahrzeuginnenraumseiten getrennt. Damit dies im Vergleich zu Klimaanlagen mit für die linke und rechte Fahrzeuginnenraumseite getrennt vorgesehener Luftverteilung ohne größere Komforteinbuße erfolgen kann, ist es vorteilhaft, daß im Klimaautomatikbetrieb die Steuerung der Entfrosterklappen in Abhängigkeit vom Temperatursollwert für die Fahrerseite bzw. in Abhängigkeit vom höheren der beiden eingestellten Temperatursollwerte (hier 23,5°C) erfolgt. Es ist ferner vorteilhaft, daß die Steuerung der Belüftungsklappen in Abhängigkeit vom höheren der beiden Temperatursollwerte (hier also wieder 23,5°C) erfolgt. Schließlich ist noch erforderlich, darin besteht der Kern der Erfindung, daß die Fußraumklappe(n) für zumindest nahezu den gesamten Regelbereich der Klimaanlage bzw. -automatik zumindest nahezu in die vollständige Offenstellung gesteuert ist bzw. sind und daß die Fußraumausblastemperatur ϑ zumindest nahezu während der gesamten Zeit, während der die Fußraumklappe(n) zumindest nahezu in die vollständige Offenstellung gesteuert ist bzw. sind, bei durch die Fußraumtemperaturregelung niedriger als etwa 29°C vorgegebener Fußraumausblastemperatur durch Übersteuerung der Fußraumtemperaturregelung im Bereich von etwa 29°C gehalten wird.

Es wird damit eine sehr angenehme Klimatisierung des Fahrzeuginnenraums erreicht, da auf keiner der beiden Fahrzeuginnenraumseiten Luft mit einer unangenehm niederen Temperatur aus den Fußraumausströmern in den Fahrzeuginnenraum gelangt. Es wird vielmehr erreicht, daß stets eine hinreichend große Menge wohltemperierter Luft von etwa 29°C in den Fußraum und damit in den Fahrzeuginnenraum strömt.

Anhand der beiden Diagramme von Fig. 2a und Fig. 2b soll der Kern des erfindungsgemäßen Verfahrens im Vergleich zu herkömmlichen Klimaautomatikregelungen näher erläutert werden.

In dem Diagramm von Fig. 2a ist als Kennlinie 15 die Fußraumausblastemperatur ϑ in Abhängigkeit von der Führungsgröße Y des Führungsreglers einer nach dem erfindungsgemäßen Verfahren arbeitenden Klimaanlage bzw. -automatik dargestellt. Demgegenüber ist im Vergleich dazu als Kennlinie 16 die Fußraumausblastemperatur ϑ in Abhängigkeit von der vorstehend genanntenn Stellgröße Y des Führungsreglers einer herkömmlichen Klimaanlage bzw. -automatik nach dem Stand der Technik dargestellt.

Wie der Fig. 2a zu entnehmen ist, beträgt die als Kennlinie 15 dargestellte Fußraumausblastemperatur ϑ gemäß dem erfindungsgemäßen Verfahren noch 29°C, wenn die bei den herkömmlichen Klimaanlagen bzw. Klimaautomatikgeräten durch die Regelung vorgegebene Fußraumausblastemperatur bereits deutlich unter 29°C liegen würde. Bei den Klimaanlagen bzw. -geräten, die nach dem erfindungsgemäßen Verfahren arbeiten, wird die Temperaturregelung in diesem Bereich durch eine Temperatursteuerung übersteuert.

Wie der Gegenüberstellung des Diagramms von Fig. 2a und des Diagramms von Fig. 2b, in dem die Fußraumklappenposition in Abhängigkeit von der Stellgröße Y des Führungsreglers der Klimaanlage bzw. -automatik dargestellt ist, zu entnehmen ist, wird die Fußraumausblastemperatur ϑ zumindest nahezu während der gesamten Zeit, während der die Fußraumklappe in die vollständige Offenstellung gesteuert ist bei durch die Fußraumtemperaturregelung niedriger als etwa 29°C vorgegebener Fußraumausblastemperatur ϑ durch Übersteuerung der Fußraumtemperaturregelung im Bereich von etwa 29°C gehalten wird.

In Fig. 2b ist der Kennlinie 17, die die Fußraumklappenposition in Abhängigkeit von der Stellgröße Y des Führungsreglers einer nach dem erfindungsgemäßen Verfahren arbeitenden Klimaanlage bzw. -automatik zeigt, die Kennlinie 18 gegenübergestellt, die die Fußraumklappenposition in Abhängigkeit von der Stellgröße Y einer herkömmlichen Klimaanlage bzw. -automatik wiedergibt. Die Fig. 2b zeigt, daß bei herkömmlichen Klimaanlagen bzw. -automatikgeräten die Fußraumklappe bereits vollständig geschlossen wird, wenn die Stellgröße Y den Wert 30 % unterschreitet. Im Vergleich dazu ist der Fig. 2b anhand der Kennlinie 17 zu entnehmen, daß die Fußraumklappe bei einer nach dem erfindungsgemäßen Verfahren arbeitenden Klimaanlage bzw. -automatikgerät für zumindest nahezu den gesamten Regelbereich der Klimaanlage bzw. -automatik in die vollständige Offenstellung gesteuert ist.

Durch das erfindungsgemäße Verfahren wir damit erreicht, daß die Fußraumklappe bzw. -klappen für einen ausreichenden Lufteintritt stets geöffnet bleiben und daß zudem mit der Ausnahme, daß eine kühlere Fußraumausblastemperatur ϑ ausdrücklich gewünscht wird, stets eine wohltemperierte Luft im Bereich von etwa 29°C in den Fußraum eingeblasen wird.

## Patentansprüche

1. Verfahren zur Steuerung und Regelung einer Klimaanlage bzw. -automatik für Kraftfahrzeuge mit einer Bedieneinheit mit einem ersten und einem zweiten Temperatureinstellelement zur manuellen Sollwertvorgabe der für die linke und die rechte Fahrzeuginnenraumseite einzustellenden Temperaturen der für beide Fahrzeuginnenraumseiten getrennt vorgesehenen, d. h. zweikanalig ausgeführten Temperaturregelung sowie mit mindestens einem Einstellelement zum Einschalten eines Automatikbetriebes, bei dem die Luftverteilung in den beiden Fahrzeuginnenraumseiten über die Entfrosterklappe(n), Belüftungsklappe(n) sowie Fußraumklappe(n) insbesondere einheitlich, d. h. einkanalig gesteuert bzw. geregelt wird,
dadurch gekennzeichnet, daß auch bei eingeschaltetem Automatikbetrieb die Temperaturregelung für beide Fahrzeuginnenraumseiten getrennt und damit zweikanalig erfolgt und daß die Fußraumklappe(n) für zumindest nahezu den gesamten Regelbereich der Klimaanlage bzw. -automatik zumindest nahezu in die vollständige Offenstellung gesteuert ist bzw. sind und daß die Fußraumausblastemperatur (ϑ) zumindest nahezu während der gesamten Zeit, während der die Fußraumklappe(n) zumindest nahezu in die vollständige Offenstellung gesteuert ist bzw. sind, bei durch die Fußraumtemperaturregelung niedriger als etwa 29°C vorgegebener Fußraumausblastemperatur durch Übersteuerung der Fußraumtemperaturregelung im Bereich von etwa 29°C gehalten wird, wobei
bei einer Klimaanlage bzw. -automatik, bei der die Luftverteilung in den beiden Fahrzeuginnenraumseiten über die Entfrosterklappe(n), Belüftungsklappe(n), sowie Fußraumklappe(n) einheitlich, d. h. einkanalig gesteuert bzw. geregelt wird, im Automatikbetrieb die Regelung der Entfrosterklappe(n) in Abhängigkeit vom Temperatursollwert für die Fahrerseite bzw. alternativ in Abhängigkeit vom höheren der beiden Temperatur-Sollwerte und die Regelung der Belüftungsklappe(n) in Abhängigkeit vom höheren der beiden Temperatur-Sollwerte erfolgt.

## Claims

1. A method of open-loop and closed-loop control of an air-conditioning or automatic air-conditioning system for motor vehicles, comprising an operating unit containing a first and a second temperature-adjusting element for manually presetting the temperature of the left and the right side of the vehicle interior as set by the temperature control provided separately, that is in two channels, for each side of the vehicle interior, and also comprising at least one adjusting element for switching on automatic control, wherein the air distribution in the two sides of the vehicle interior is controlled in open loop or closed loop, more particularly uniformly, that is in a single channel, via the defroster, ventilation and foot-space flap or flaps, **characterised in that** even when automatic operation is switched on, the temperature is controlled separately, that is in two channels, for both sides of the vehicle interior and in that the foot-space flap or flaps are kept at least approximately in the fully open position over at least approximately the total control range of the air-conditioning or automatic air-conditioning system and in that the foot space blow-through temperature θ is held in the region of about 29°C by overriding the foot-space temperature control at least approximately during the entire time during which the foot-space flap or flaps are set at least approximately in the fully open position, when the foot-space blow-out temperature is preset at less than about 29°C by overriding the foot-space temperature closed-loop control in the region of around 29°C, wherein, in the case of an air-conditioning or automatic air-conditioning system in which the air distribution is controlled in an open or closed loop uniformly, that is in a single channel, on both sides of the vehicle interior via the defroster, ventilation and foot-space flap or flaps, during automatic operation the defroster flap or flaps are controlled in dependence on the temperature set or the driver's side or alternatively in dependence on the higher of the two set temperatures, and the ventilation flap or flaps are controlled in dependence on the higher of the two set temperatures.

## Revendications

1. Procédé de commande ou de régulation d'une installation de climatisation ou d'un appareil automatique de climatisation pour des véhicules automobiles comprenant, une unité de commande ayant un premier et un second élément de réglage de la température pour prédéterminer manuellement la valeur de consigne de la température à régler du côté gauche et du côté droit de l'habitacle, séparément pour les deux côtés de l'habitacle, c'est-à-dire une régulation de température à deux canaux, ainsi qu'au moins un élément de réglage pour mettre en oeuvre le fonctionnement automatique, pour lequel la répartition de l'air des deux côtés de l'habitacle est commandée ou réglée de manière uniforme, c'est-à-dire suivant un canal à travers le ou les volets de dégivrage, le ou les volets de ventilation ainsi que le ou les volets à la base des pieds,
caractérisé en ce que
- même lorsque le fonctionnement automatique est branché, la régulation de température pour les deux côtés de l'habitacle se fait séparément et ainsi suivant deux canaux et,
- le ou les volets à la base de l'habitacle sont commandés pour pratiquement toute la plage de régulation de l'installation de climatisation ou appareil automatique de climatisation, pour être en position pratiquement complètement ouverte, et en ce que la température de soufflage de l'air au niveau des pieds (θ) au moins pratiquement pendant tout le temps pendant lequel les volets à la base des pieds sont commandés pratiquement en ouverture complète, est maintenue par la régulation de la température dans le volume des pieds, inférieure à environ 29°C qui est la température de soufflage prédéterminée de l'air à la base des pieds, en faisant une commande principale de la régulation de température à la base des pieds, dans une plage qui est de l'ordre de 29°C, et
- dans le cas d'une installation de climatisation ou appareil automatique de climatisation dans laquelle la distribution de l'air des deux côtés de l'intérieur de l'habitacle se fait à travers des volets de dégivrage, des volets de ventilation et un ou des volets à la base de l'habitacle au niveau des pieds, est commandée de manière unique, c'est-à-dire en canal unique ou est régulée et en mode automatique, la régulation du ou des volets de dégivrage se fait en fonction de la valeur de consigne de la température pour le côté du conducteur ou en variante en fonction de la plus élevée des deux valeurs de température de consigne et la régulation du ou des volets de ventilation se fait en fonction de la plus élevée des deux valeurs de température de consigne.
